# FASCICULE DE BREVET EUROPEEN

(11) **EP 1 071 979 B1**
(45) Date de publication et mention de la délivrance du brevet: **04.09.2002**
(21) Numéro de dépôt: 99913399.4
(22) Date de dépôt: 13.04.1999
(51) Int. Cl.: G02F 1/1335

(54) **AMELIORATION DE L'ANGLE DE VUE D'UN ECRAN LCD**
VERBESSERUNG DES BLICKWINKELS EINES LCD-BILDSCHIRMS
IMPROVED LCD SCREEN VIEWING ANGLE

(30) Priorité: 14.04.1998 FR 9804628
(43) Date de publication de la demande: 31.01.2001
(73) Titulaire: THALES AVIONICS S.A., 78141 Vélizy Villacoublay Cédex (FR)
(72) Inventeur: BIGNOLLES, Laurent Thomson-CSF P.I.,Dept. Brevets, 94117 Arcueil Cedex (FR); DE LAUZUN, Frédéric Thomson-CSF P.I.Dept. Brevets, 94117 Arcueil Cedex (FR); GEORGES, Laurent Thomson-CSF P.I., Dept. Brevets, 94117 Arcueil Cedex (FR); LABORIE, Jean-J. Thomson-CSF P.I., Dept. Brevets, 94117 Arcueil C edex (FR)
(74) Mandataire: Lucas, Laurent Jacques
(86) Numéro de dépôt international: FR9900863
(87) Numéro de publication internationale: WO99053367

(56) Documents cités:
- EP-A- 0 512 459
- EP-A- 0 646 829
- EP-A- 0 774 682
- WO-A-96/15473
- US-A- 5 528 400

## Description

La présente invention concerne les dispositifs d'affichage électrooptiques modulant la lumière les traversant et plus précisément les panneaux à cristaux liquides.

Ces panneaux présentent des caractéristiques intéressantes pour réaliser des écrans d'affichage en avionique : ils sont moins encombrants que les écrans classiques à tube cathodique et ils consomment peu d'énergie.

Sur un panneau à cristaux liquides, une image est affichée à l'aide de points élémentaires colorés, ou noirs, juxtaposés. Un point élémentaire correspond à la lumière transmise à sa face avant par une cellule à cristal liquide éclairée sur sa face arrière. De l'arrière à l'avant, une cellule à cristal liquide comporte généralement un empilement d'un polariseur, d'un premier substrat transparent, d'une mince couche de cristal liquide, d'un second substrat transparent et d'un analyseur.

Ces substrats transparents comportent des électrodes également transparentes dont la mise sous tension permet de soumettre les molécules de cristal liquide à un champ électrique perpendiculaire au plan de la cellule.

Et une molécule de cristal liquide présente deux caractéristiques remarquables ; elle peut modifier, en fonction de son orientation spatiale, la polarisation d'une lumière la traversant d'une part et un champ électrique peut changer son orientation d'autre part.

Ainsi le repos (tension nulle) et la mise sous tension de la couche de cristal liquide conduisent à deux arrangements distincts des molécules de cristal liquide dans la couche définissant deux états (état activé et état non activé) de la cellule tels que par exemple dans l'un la cellule laisse passer la lumière et dans l'autre elle l'absorbe. Selon son état la cellule permet d'afficher un point blanc ou un point noir. Des gris sont réalisables avec des tensions intermédiaires qui imposent d'autres orientations aux molécules de cristal liquide. De plus un filtre de couleur inséré dans l'empilement d'une cellule permet la présentation d'un point coloré. Cette technologie permet l'affichage d'images en noir et blanc ou en couleurs.

Cependant avec un panneau à cristaux liquides, l'image perçue dépend de l'angle de vue sous lequel le panneau est observé. Une image de bonne qualité perçue par l'observateur lorsqu'il place son regard selon la direction normale au plan du panneau est déformée lorsqu'il incline la direction de son regard par rapport à cette direction normale. Ce qui réduit généralement l'exploitation d'un panneau à cristaux liquides aux directions d'observations s'écartant peu de la normale au panneau : le panneau présente un angle de vue restreint.

Pour un écran d'affichage qui doit être lisible par un observateur dont la position n'est pas fixe et/ou par plusieurs observateurs placés autour de l'écran, comme par exemple un écran d'une cabine de pilotage d'un avion, la restriction de l'angle de vue du panneau à cristaux liquide est un sérieux inconvénient.

Pour l'utilisateur de l'écran, la couche de cristal liquide présente des défauts de comportement optique. Les défauts sont notamment dus au contraste lumineux entre les états d'une cellule qui présente la particularité gênante d'évoluer avec l'angle d'observation et donc de perturber l'observation du panneau.

Cet effet s'explique par la biréfringence naturelle d'une molécule de cristal liquide selon laquelle la modification par la molécule de la polarisation de la lumière la traversant dépend de l'orientation relative entre cette lumière et la molécule, le changement d'angle d'observation conduit à une modification de la polarisation de la lumière reçue par l'analyseur et donc à une modification de la transmission de la cellule.

L'art antérieur propose des corrections partielles de cette biréfringence dans certaines situations où elle est gênante pour divers types de cellules à cristal liquide.

Nous nous intéressons plus particulièrement aux cellules comportant un cristal liquide nématique en hélice et des polariseurs (un polariseur, un analyseur) croisés entre eux, situés de part et d'autre de la couche de cristal liquide. L'hélice assure une rotation de la lumière polarisée d'environ 90 degrés. Dans leur état non activé, ces cellules assurent une forte transmission de la lumière reçue. Leur état activé correspond à une absorption importante de la lumière; une cellule activée observée selon sa normale assure une très faible transmission de lumière. Le défaut principal de ces cellules est, à l'état activé, une augmentation nette de la transmission lumineuse pour une observation inclinée par rapport à la normale à la cellule : un point noir observé perpendiculairement à la cellule s'éclaircit lorsque l'observateur s'éloigne de la normale à la cellule, le contraste entre le blanc et le noir diminue avec cet éloignement par rapport à la normale. Le contraste est le rapport des transmissions de chaque état; c'est le quotient de la transmission de la cellule dans l'état activé par celle dans l'état non activé.

A l'état activé, la biréfringence des molécules de cristal liquide est pénalisante.

L'art antérieur propose de corriger, toujours incomplètement, cette biréfringence par l'ajout de film biréfringent de compensation dans l'empilement de la cellule.

Une première correction connue consiste à utiliser un film biréfringent uniaxe présentant une anisotropie d'indice de réfraction négative dans la direction perpendiculaire au plan de la cellule. Le film est uniaxe négatif d'axe optique extraordinaire normal à la cellule.

Puis des corrections donnant plus de satisfaction ont été développées. Ainsi le brevet EP 0 646 829 propose un film biréfringent comportant un support présentant les caractéristiques de la première correction connue sur lequel est polymérisé un cristal liquide discotique orienté par frottement. Il décrit un type de film biréfringent comportant deux milieux uniaxes négatifs présentant chacun un axe optique extraordinaire l'un étant parallèle à la normale à la cellule, l'autre étant incliné par rapport à cette normale d'une part et par rapport au plan de la cellule d'autre part.

Le problème consiste avec des films de compensation à élargir encore le champ d'observation d'un panneau à cristaux liquides dans un plan perpendiculaire au panneau. Et notamment pour un panneau placé verticalement on cherche à améliorer l'angle de vue horizontal assurant une bonne lisibilité au panneau pour un observateur se déplaçant horizontalement vers la droite ou vers la gauche du panneau.

L'invention propose une solution originale qui consiste à décroiser les polariseurs et les films de compensation pour élargir l'angle d'observation.

Plus précisément l'invention propose un dispositif d'affichage avec une cellule de cristal liquide comportant une couche de cristal liquide nématique en hélice placée entre deux polariseurs et comportant, entre la couche de cristal liquide et chacun des polariseurs, une structure de compensation des variations de contraste de la cellule en fonction de l'angle d'observation qui comporte une couche matériau biréfringent uniaxe négatif d'axe extraordinaire perpendiculaire au plan de la cellule à laquelle est superposée une couche d'un matériau biréfringent uniaxe négatif d'axe extraordinaire incliné par rapport à la normale au plan de la cellule, l'orientation de la structure de compensation étant parallèle et de sens opposé à la projection de l'axe extraordinaire incliné selon la normale au plan de la cellule, les sens passants des polariseurs étant écartés d'un angle de 90 + A degrés où A n'est pas nul et les orientations des deux structures de compensation sont écartées d'un angle de 90 + B degrés où B n'est pas nul.

La compensation des variations de contraste de la cellule en fonction de l'angle d'observation corrige les effets gênants des variations de transmission de la cellule biréfringente en fonction de l'angle d'observation. La compensation corrige la biréfringence de la cellule.

La solution originale de l'invention consiste à arranger les polariseurs dans une position relative particulière qui est différente de celle de l'art antérieur dans lequel les polariseurs sont croisés perpendiculairement de façon à ce qu'un polariseur puisse bloquer la lumière polarisée par l'autre. La position particulière peut par exemple être obtenue par un décroisement d'une paire de polariseurs de l'art antérieur. Le décroisement correspond à une rotation selon la normale à la cellule de l'un des polariseurs et à une rotation selon le même axe mais en sens inverse de l'autre polariseur. Les valeurs absolues des angles de chacune des rotations du décroisement sont égales ou différentes.

Le décroisement est effectué dans le sens où l'augmentation de la plage d'angle de vue est la plus favorable. Le décroisement se fera dans un sens où dans un autre selon que l'hélice du cristal nématique engendrée par les directions d'alignement des molécules sur les faces de la couche de cristal liquide sera une hélice dans le sens trigonométrique positif ou négatif.

Le décroisement est décrit pour faciliter la compréhension des positions relatives dans l'invention, mais l'arrangement relatif des éléments de la cellule peut bien sûr être obtenu directement sans réaliser physiquement d'opérations de rotation.

La structure de compensation des variations de contraste de la cellule se présente de préférence sous la forme d'un film plan parallèle au plan de la cellule et caractérisé par une direction d'orientation dans ce plan. Dans l'invention les directions d'orientation de chacune des structures de compensation, une de chaque côté de la couche de cristal liquide, ne sont pas non plus perpendiculaires, elles sont également décroisées.

Dans une réalisation préférée de l'invention les valeurs absolues des angles de chacune des rotations du décroisement sont différentes, l'une étant de préférence nulle.

Les directions d'alignement des molécules sur les faces de la couche de cristal liquide sont de préférence perpendiculaires.

De préférence le décroisement des polariseurs tel que décrit pour faciliter la compréhension s'effectue à partir de polariseurs qui sont croisés entre eux et tels que chaque polariseur est croisé avec la direction d'alignement de la face la plus proche de la couche de cristal liquide. Ces orientations relatives entre un polariseur et la direction d'alignement des molécules de cristal liquide les plus proches présentent l'avantage de limiter les inversions de contraste.

L'invention permet d'élargir le champ d'observation d'un panneau à cristaux liquides. Et notamment pour un panneau vertical, l'angle de vue horizontal est élargi.

D'autres caractéristiques et avantages de l'invention apparaîtront à la lecture de la description qui suit et qui est faite en référence aux dessins annexés dans lesquels :
- la figure 1 représente schématiquement une cellule à cristal liquide dans une configuration connue avec des polariseurs croisés, la figure 1a illustrant l'état non activé de la cellule et la figure 1b illustrant l'état activé de la même cellule;
- la figure 2 représente une cellule de l'art antérieur avec deux structures de compensation optique;
- la figure 3 représente une partie d'un film de compensation de l'art antérieur;
- la figure 4 représente une vue de face des orientations selon l'art antérieur des éléments de la cellule;
- la figure 5 représente une réalisation de l'invention;
- la figure 6 représente une autre réalisation de l'invention.

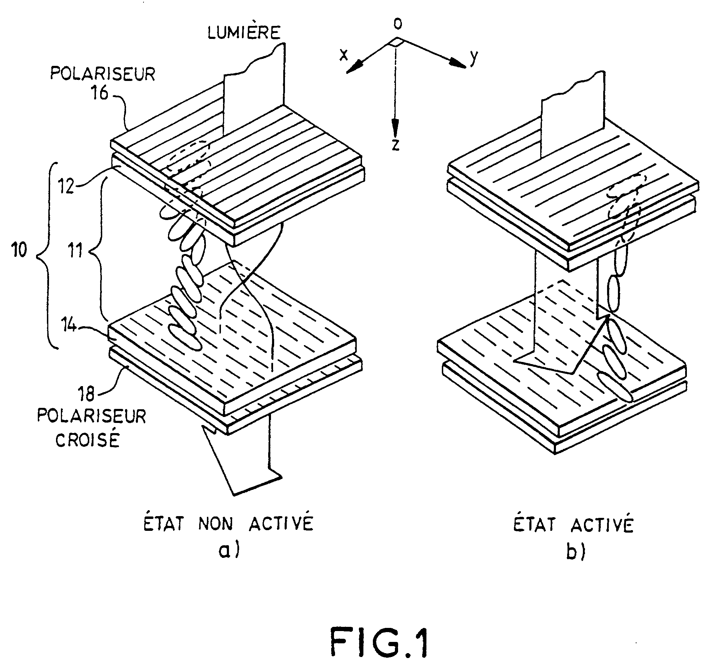

Une cellule à cristal liquide est représentée schématiquement sur la figure 1, elle comporte de façon connue dans l'empilement selon l'axe Oz d'un polariseur 16, d'un premier substrat transparent 12, de molécules 11 de cristal liquide, d'un second substrat transparent 14 et d'un analyseur qui est un polariseur 18 croisé avec le premier poiariseur 16. L'ensemble des premier 12 et second 14 substrats et des molécules 11 forme une couche 10 de cristal liquide plane et parallèle au plan Oxy.

Dans le cas d'un cristal liquide nématique en hélice, les molécules de cristal liquide voisines de l'un 12 des deux substrats transparents sont orientées dans une première direction d'alignement par exemple parallèle à l'axe Ox et les molécules voisines de l'autre 14 substrat sont orientées selon une seconde direction d'alignement par exemple parallèle à l'axe Oy. Les première et seconde directions d'alignement sont de préférence perpendiculaires entre elles.

L'alignement peut être obtenu par traitement des faces des substrats 12 et 14 qui sont en contact avec le cristal liquide, par exemple par frottement de la surface dans la direction d'alignement.

Lorsque la cellule est au repos, elle est dans l'état non activé illustré par la figure la où les molécules 11 de la couche de cristal sont parallèles au plan Oxy de la cellule et forment, à l'aide des directions d'alignement perpendiculaires des substrats, une hélice dans l'épaisseur de la couche 10. La lumière reçue sur la face arrière de la cellule non activée est polarisée rectilignement par le polariseur 16, puis en traversant l'épaisseur de la couche 10 de cristal liquide en hélice, cette polarisation rectiligne est modifiée par la biréfringence des molécules 11 traversées et subit une rotation de 90 degrés due à l'hélice. A la sortie de la couche 10, la lumière est polarisée perpendiculairement au premier polariseur 16, elle peut donc traverser librement le second polariseur croisé 18 dont le sens passant est perpendiculaire à celui du premier polariseur 16. La cellule dans l'état non activé assure une forte transmission de la lumière.

Lorsque la cellule est mise sous tension, elle est dans l'état activé illustré par la figure 1b où un champ électrique perpendiculaire à la couche mince 11 est appliqué entre les électrodes transparentes mises sous tension et portées par les substrats 12 et 14. Les molécules 11 de la couche 10, tendant à s'aligner avec le champ électrique, se redressent par rapport au plan de la cellule et l'hélice précédemment observée est détruite dans l'épaisseur de la couche 10. Dans l'état activé, la lumière traverse aussi la couche 11 mais l'arrangement des molécules qu'elle rencontre tend à lui faire conserver une polarisation rectiligne dans la direction imposée par le polariseur 16. La lumière à la sortie de la couche 10 est absorbée par le second polariseur 18 croisé avec le premier polariseur.

Dans l'état activé, la cellule observée selon la direction perpendiculaire à son plan ne transmet pratiquement pas de lumière. Mais lorsque la direction d'observation est inclinée par rapport à la normale à la cellule, la lumière inclinée est affectée par la biréfringence des molécules qui modifie sa polarisation et une partie de cette lumière traverse alors le second polariseur.

L'arrangement des molécules dans la couche de cristal liquide mise sous tension est assez complexe car la destruction de l'hélice observée au repos n'est que partielle.

Une molécule de cristal liquide est allongée, de manière approchée elle se comporte optiquement comme un milieu biréfringent uniaxe positif dont l'axe extraordinaire est orienté selon la longueur de la molécule. La couche de cristal liquide sous tension peut-être représentée de façon très simplifiée par un empilement de sous-couches dans lesquelles la biréfringence est homogène et les molécules présentent une même orientation. Dans ce modèle de représentation chaque sous-couche est un milieu biréfringent uniaxe positif dont la direction de l'axe extraordinaire caractérise la sous-couche.

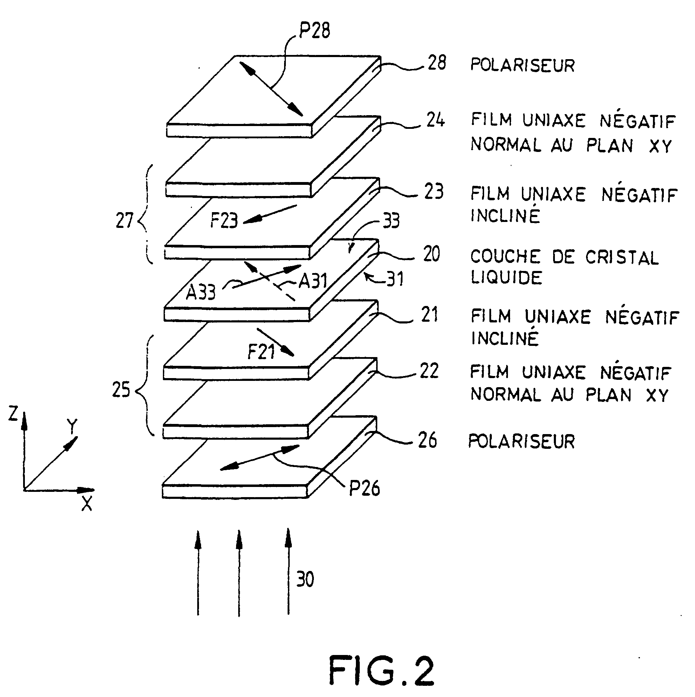

La figure 2 représente suivant l'axe Z l'empilement connu d'une cellule à cristal liquide éclairée sur l'arrière par les rayons lumineux 30 et comportant deux films de compensation optique 25, 27, un de chaque côté de la couche de cristal liquide plane 20, situés entre les deux polariseurs 26 et 28. Le plan de la cellule est le plan XY. Les films arrière 25 et avant 27 sont par exemple du type de ceux décrits dans le brevet EP 0 646 829. Chaque film 25, 27 comporte dans son épaisseur un milieu 22, 24 uniaxe négatif d'axe extraordinaire Z perpendiculaire au plan XY de la cellule et un milieu 21, 23 uniaxe négatif d'axe extraordinaire incliné par rapport à la normale Z à la cellule et par rapport au plan XY de la cellule. Le milieu uniaxe incliné 21, 23 étant le plus proche de la couche 20 de cristal liquide.

Les polariseurs 26, 28 de cette cellule sont croisés, leurs sens passants, respectivement P26 et P28, sont perpendiculaires entre eux. La couche de cristal 20 présente une direction d'alignement A31 des molécules sur sa face arrière 31 dans le plan XY qui est perpendiculaire à celle A33 de la face avant 33, laquelle est également dans le plan XY. La couche de cristal présente au repos une hélice dont la torsion est par exemple de 90 degrés dans son épaisseur. De préférence le sens passant P26, P28 de chaque polariseur est croisé avec la direction d'alignement A31, A33 de la face la plus proche de la couche de cristal liquide.

L'orientation du milieu 21 uniaxe adjacent à la face 31 arrière de la couche 20 est repérée dans le plan XY par la direction F21 du frottement mis en oeuvre dans la réalisation du film 25 selon le brevet cité. La direction F21 est parallèle à la direction d'alignement A31 des molécules sur la face arrière 31 mais de sens opposé. De même, l'orientation du milieu 23 uniaxe adjacent à la face avant 33 de la couche 20 est repérée par la direction F23 parallèle et de sens opposé à l'alignement A33 des molécules de la face avant 33; la direction F23 correspondant au frottement pour la réalisation du film 27. Les directions F21 et F23 sont perpendiculaires entre elles.

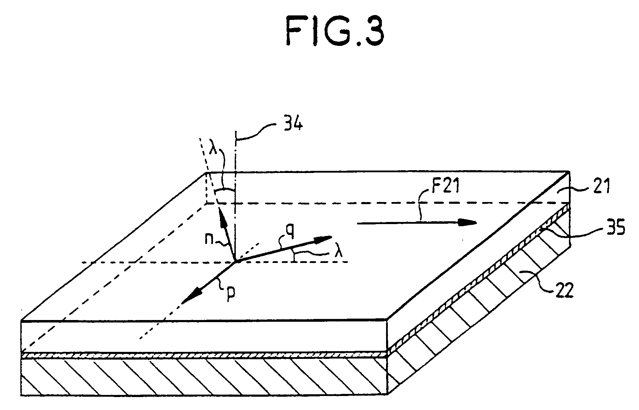

La figure 3 représente une partie du film arrière 25 de compensation déjà illustré par la figure 2; ce film 25 comporte un milieu 22 uniaxe négatif dont l'axe extraordinaire rapide est orienté selon la normale 34 au film et dont la face supérieure 35 a été frottée dans la direction F21, il comporte également un milieu 21 uniaxe négatif dont l'axe extraordinaire n est incliné par rapport à cette normale 34 d'un angle λ dans le plan contenant la normale 34 et la direction de frottement F21. L'ellipsoïde des indices qui caractérise le milieu 21 est de révolution autour de l'axe n qui est l'axe optique ou axe extraordinaire de ce milieu. Un axe ordinaire p est à la fois dans le plan XY de la cellule et perpendiculaire à l'axe extraordinaire n, un second axe ordinaire q est perpendiculaire aux axes n et p. Une onde arrivant perpendiculairement au substrat 21 selon la droite 34 voit deux lignes neutres : l'axe lent est l'axe p et l'axe rapide est la projection de l'axe q dans le plan du substrat.

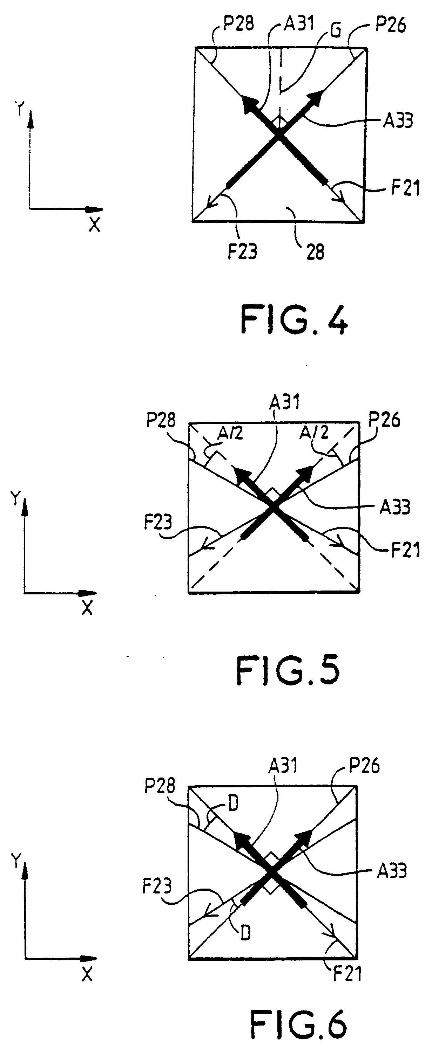

Lorsque la cellule de la figure 2 est vue par l'avant, c'est-à-dire dans le sens négatif de l'axe Z, le polariseur 28 est au premier plan et les orientations des divers éléments de l'empilement sont illustrées par la figure 4 dans le plan XY de la cellule. Une orientation dans le plan est représentée sur la figure 4 par une flèche, et les orientations des éléments superposés sont également superposées. Ainsi les directions A31 et A33 d'alignement sur les faces de la couche de cristal nématique sont perpendiculaires, les sens passants P26 et P28 des polariseurs sont également perpendiculaires entre eux et les directions F21 et F23 de frottement des films de compensation sont aussi perpendiculaires entre elles. L'axe passant P26 du polariseur 26 est perpendiculaire à la direction F21, il est parallèle à la direction de l'axe p de la figure 3. Et l'axe passant P28 du polariseur 28 est perpendiculaire à la direction F23 du matériau uniaxe négatif incliné le plus proche. On remarque sur la figure 4, la bissectrice intérieure G des directions d'alignement (A31, A33) des molécules extrêmes de la couche de cristal liquide 20.

La figure 5 représente une réalisation de l'invention selon le même point de vue que la figure 4. Dans cette réalisation la cellule à cristal liquide comporte les éléments empilés précédemment décrits, comme la cellule de l'art antérieur de la figure 2, mais l'invention consiste à les orienter d'une manière différente qui présente l'avantage d'améliorer l'angle d'observation d'un panneau comportant de telles cellules.

En observant cette cellule selon l'invention de face dans le sens négatif de l'axe Z normal à cette cellule, celle ci comporte successivement entre un polariseur 28 d'axe passant P28 à l'avant et un polariseur 26 d'axe passant P26 à l'arrière, un film de compensation 27 comportant un premier matériau 24 uniaxe négatif d'axe selon Z et un second matériau 23 uniaxe négatif d'axe incliné par rapport à Z et par rapport au plan XY, l'orientation du second matériau étant donnée dans le plan XY par une direction F23, une couche 20 de cristal liquide nématique présentant une direction d'alignement à l'avant A33 et une autre à l'arrière A31, un film de compensation 25 comportant un troisième matériau 21 uniaxe négatif incliné dont l'orientation dans le plan XY est donnée par une direction F21 et un quatrième matériau 22 uniaxe négatif d'axe Z. La direction F23 du second matériau dans le plan XY est alignée avec la projection orthogonale sur ce plan de la direction de l'axe extraordinaire n du second matériau 23 uniaxe négatif d'axe extraordinaire incliné, et la direction F23 est dirigée dans le sens opposé à cette projection. De même la direction F21 est alignée avec la projection sur le plan XY de la direction de l'axe extraordinaire n du troisième matériau 21 uniaxe négatif incliné selon la normale au plan XY et de sens opposé.

Cette cellule présente de préférence une torsion de 90 degrés pour l'hélice du cristal nématique au repos, elle présente des directions d'alignement A31 et A33 perpendiculaires. Lorsque la cellule de cristal liquide n'est pas activée, les molécules qui sont dans un plan parallèle au plan XY et situé au milieu de l'épaisseur de la couche 20 de cristal liquide sont sensiblement parallèles à l'axe Y. L'axe Y est de préférence orienté du bas vers le haut de l'écran. Les directions de polarisation P26 et P28 sont décroisées, elles sont écartées d'un angle de 90 + A degrés. La valeur de l'angle A étant de préférence supérieure à 2 degrés et inférieure à 20 degrés, par exemple entre 2 et 6 degrés. Dans la réalisation de la figure 5, la direction de polarisation P26 à l'arrière de la cellule est écartée d'un angle 90 + A/2 degrés de la direction d'alignement A31 la plus proche et de même les directions correspondantes de l'avant de la cellule P28 et A33 sont écartées du même angle pris en sens inverse. Les bissectrices des directions d'alignement A31 et A33 (lesquelles directions d'alignement sont par exemple des directions de frottage des substrats contenant le cristal liquide) des molécules extrêmes de la couche de cristal liquide sont de préférence les bissectrices des sens passants des polariseurs P26 et P28.

Dans cette réalisation de l'invention l'orientation F23 dans le plan XY du film incliné 23 à l'avant de la cellule reste parallèle au sens passant P26 du polariseur le plus éloigné, de même l'orientation F21 du film incliné 21 à l'arrière de la cellule est parallèle au sens passant P28 du polariseur à l'avant de la cellule qui est le plus éloigné du film 21. Les films de compensation sont décroisés de la même valeur que les polariseurs.

Mais dans une autre réalisation de l'invention les orientations F23 et F21 peuvent être décroisées sans être parallèles au sens passant des polariseurs correspondants.

Les orientations F23 et F21 sont par exemple écartées d'un angle 90 + B degrés où l'angle B est non nul et peut être différent de l'angle A. De préférence les bissectrices des directions d'alignement A31 et A33 des molécules extrêmes de la couche de cristal liquide prise dans son épaisseur sont les bissectrices des orientations F23 et F21 des structures de compensation optique. De préférence l'angle B est égal à l'angle A.

Dans une autre réalisation de l'invention, le décroisement des polariseurs P26 et P28 correspond, en se référant à la position intiale de la figure 4, à une rotation d'un premier angle C selon la normale à la cellule de l'un des polariseurs P26 et à une rotation d'un second angle D selon le même axe mais en sens inverse de l'autre P28 des polariseurs. Les directions de polarisation P26 et P28 sont écartées d'un angle 90 + C + D degrés et les valeurs du premier et du second angle de rotation sont distinctes. Les bissectrices des directions d'alignement des molécules extrêmes de la couche de cristal liquide ne sont pas colinéaires avec les bissectrices des sens passants des polariseurs (P26, P28). Chacune des valeurs C, D des angles de rotation est de préférence positive et inférieure à 20 degrés. Les deux valeurs angulaires C et D ne sont pas simultanément nulles. Chaque structure de compensation est de préférence décroisée comme le polariseur le plus proche. Dans une réalisation préférée, l'une des deux valeurs angulaires de rotation est nulle, par exemple le premier angle C est nul. Dans cette réalisation représentée sur la figure 6, une première structure de compensation est non décroisée d'un côté de la couche de cristal liquide, par exemple la structure d'orientation F21 du côté de la lumière d'éclairage incidente, et une seconde structure de compensation d'orientation F23 est décroisée. Dans la mise en ouvre de cette réalisation, seule la seconde structure de compensation d'orientation F23 décroisée nécessite une découpe dans le matériau d'une structure du commerce, en tenant compte de l'angle de décroisement, la première structure étant une directement utilisée telle que vendue dans le commerce. Cette réalisation est plus facile à réaliser et moins coûteuse que celle comprenant deux structures modifiées à partir des structures disponibles. Les orientations F21 et F23 sont écartées d'un angle 90 + D. De préférence l'angle C est nul et l'angle D est égal à 4 degrés.

Dans l'invention, pour une cellule à cristal liquide ayant des polariseurs de type croisés, les sens passants des polariseurs ne sont plus perpendiculaires. Par rapport au positionnement de l'art antérieur où les sens passants des polariseurs sont effectivement perpendiculaires, afin qu'un polariseur puisse bloquer la lumière polarisée par l'autre, les polariseurs selon l'invention ont subi des rotations selon la normale Z au plan XY de la cellule ; la rotation pour l'un des polariseurs étant de sens opposé à celle pour l'autre polariseur. Les polariseurs de l'invention sont décroisés. Le décroisement des polariseurs est mesuré par la valeur de l'angle A. Le décroisement correspond à un angle A supérieur à 2 degrés. Dans l'invention les structures de compensation des variations de contraste de la cellule de cristal liquide sont également décroisées entre elles. Chaque structure de compensation 25, 27 possède une direction F 21, F23 dans le plan XY de la cellule et ces deux directions ne sont pas perpendiculaires entre elles.

Dans l'épaisseur de la cellule selon l'invention, les orientations relatives de la couche de cristal en hélice, de la paire de polariseurs et de la paire de structures de compensation maximisent l'angle de vue horizontal du dispositif. Dans la réalisation de la figure 5, on décroise pour s'éloigner de la bissectrice intérieure des directions d'alignement A31 et A33 des molécules extrêmes de la couche de cristal liquide. La bissectrice intérieure est parallèle à l'axe Y. L'observation du panneau est bonne pour tout angle d'observation compris dans une plage étendue autour de la normale au panneau. Une bonne observation est ici quantifiée par la perception d'un contraste au moins supérieur à une valeur minimale acceptable sur la plage angulaire considérée et par une absence d'inversion de contraste. Le contraste étant le quotient de la transmission d'une cellule à l'état activé par celle à l'état non activé.

Dans la réalisation de la figure 6, on ne décroise pas le polariseur P26 ni la structure de compensation d'orientation F21 la plus proche de ce polariseur. Le polariseur P28 et la structure d'orientation F23 sont décroisés d'une même valeur. Ceci permet d'élargir horizontalement le conoscope correspondant à la figure 4, lequel présente déjà de bonnes caractéristiques dans le sens vertical.

L'invention permet d'élargir la plage d'angles de vue horizontaux pour lesquels un panneau vertical présente une bonne lisibilité. Et notamment un contraste au moins égal à 40 est obtenu pour un angle de vue horizontal jusqu'à 40 degrés par rapport à la normale au panneau.

L'invention permet de plus une augmentation de l'angle de vue horizontal plus importante lorsque le décroisement proportionnel à l'angle A est plus important. Par exemple pour un décroisement de 2 degrés (donc A est égal à 4 degrés), on obtient une plage d'angle de vue horizontal de -45 degrés à +45 degrés, la plage étant centrée sur la normale au panneau. L'invention permet d'accorder l'angle de vue en fonction du besoin par réglage de la valeur angulaire du décroisement de la structure de compensation et du polariseur.

Une variante de réalisation de l'invention consiste en outre à réduire l'épaisseur de la couche de cristal liquide. L'épaisseur est par exemple réduite de 4,9 microns à 4,6 microns. Cette variante présente pour un décroisement identique une amélioration de l'angle de vue horizontal.

## Revendications

1. Dispositif d'affichage avec une cellule de cristal liquide comportant une couche de cristal liquide (20) nématique en hélice placée entre deux polariseurs (26, 28) et comportant, entre la couche de cristal liquide et chacun des polariseurs, une structure (21, 22, 23, 24) de compensation des variations de contraste de la cellule en fonction de l'angle d'observation qui comporte une couche (22, 24) d'un matériau biréfringent uniaxe négatif d'axe extraordinaire perpendiculaire au plan de la cellule à laquelle est superposée une couche d'un matériau (21, 23) biréfringent uniaxe négatif d'axe extraordinaire incliné par rapport à la normale au plan de la cellule, l'orientation (F21, F23) de la structure de compensation étant parallèle et de sens opposé à la projection de l'axe extraordinaire incliné selon la normale au plan de la cellule, **caractérisé en ce que** les sens passants (P26, P28) des polariseurs sont écartés d'un angle de 90 + A degrés où A n'est pas nul et les orientations (F21, F23) des deux structures de compensation sont écartées d'un angle de 90 + B degrés où B n'est pas nul.

2. Dispositif selon l'une des revendications précédentes, **caractérisé en ce que** l'hélice est à 90 degrés et l'angle A est supérieur à 2 degrés.

3. Dispositif selon l'une des revendications précédentes, **caractérisé en ce que** les bissectrices des directions d'alignement (A31, A33) des molécules extrêmes de la couche de cristal liquide sont les bissectrices des sens passants des polariseurs (P26, P28).

4. Dispositif selon l'une des revendications précédentes, **caractérisé en ce que** les bissectrices des directions d'alignement (A31, A33) des molécules extrêmes de la couche de cristal liquide sont les bissectrices des orientations des structures de compensation (F21, F23).

5. Dispositif selon la revendication 1, **caractérisé en ce que** les bissectrices des directions d'alignement (A31, A33) des molécules extrêmes de la couche de cristal liquide ne sont pas colinéaires avec les bissectrices des sens passants des polariseurs (P26, P28).

6. Dispositif selon l'une des revendications précédentes, **caractérisé en ce que** les sens passants (P26, P28) des polariseurs et les orientations (F21, F23) des structures de compensation sont écartés de la bissectrice intérieure des directions d'alignement (A31, A33) des molécules extrêmes de la couche de cristal liquide (20).

7. Dispositif selon la revendication 5, **caractérisé en ce** le décroisement des polariseurs (P26 et P28) correspond à une rotation d'un premier angle C selon la normale à la cellule de l'un des polariseurs (P26) et à une rotation d'un second angle D selon le même axe mais en sens inverse de l'autre (P28) des polariseurs, les directions de polarisation (P26 et P28) sont écartées d'un angle 90 + C + D degrés et les valeurs du premier C et du second D angle de rotation sont distinctes.

8. Dispositif selon la revendication 7, **caractérisé en ce que** l'un des premier et second angles C et D est nul, l'autre n'étant pas nul.

9. Dispositif selon la revendication 8, **caractérisé en ce que** la structure de compensation (21, 22 et 23, 24) la plus proche de chacun des polariseurs (26, 28) est décroisée de la même valeur que le polariseur.

10. Dispositif selon l'une des revendications 8 à 9, **caractérisé en ce que** l'angle non nul est égal à quatre degrés.

11. Dispositif selon l'une des revendications précédentes, **caractérisé en ce que** dans l'épaisseur de la cellule, les orientations relatives de la couche de cristal en hélice, de la paire de polariseurs et de la paire de structures de compensation maximisent l'angle de vue horizontal du dispositif.

12. Dispositif selon l'une des revendications précédentes, **caractérisé en ce que** les angles A et B sont égaux.

13. Dispositif selon l'une des revendications précédentes, **caractérisé en ce que** la valeur de l'angle A et celle de l'angle B sont comprises entre 2 et 6 degrés.

14. Dispositif selon l'une des revendications précédentes, **caractérisé en ce que** l'augmentation de l'angle de vue horizontal est réglable par augmentation du décroisement des polariseurs.

15. Dispositif selon l'une des revendications précédentes, **caractérisé en ce que** l'angle de vue horizontal du dispositif est augmenté par la réduction de l'épaisseur de la couche de cristal liquide.

## Patentansprüche

1. Anzeigevorrichtung mit einer Flüssigkristallzelle, die eine Schicht (20) aus nematischem Spiral-Flüssigkristall zwischen zwei Polarisatoren (26, 28) sowie zwischen der Flüssigkristallschicht und jedem der Polarisatoren eine Struktur (21, 22, 23, 24) zur Kompensation der Kontrastvariationen der Zelle abhängig vom Betrachtungswinkel enthält, wobei diese Struktur eine Schicht (22, 24) aus einem einachsig negativen doppelbrechenden Material mit einer außerordentlichen Achse senkrecht zur Ebene der Zelle und darüber eine Schicht aus einem doppelbrechenden und einachsig-negativen Material (21, 23) mit einer bezüglich der Senkrechten zur Ebene der Zelle geneigten außerordentlichen Achse besitzt und wobei die Ausrichtung (F21, F23) der Kompensationsstruktur parallel und entgegengerichtet zur Projektion der zur Senkrechten bezüglich der Ebene der Zelle geneigten außerordentlichen Achse liegt, **dadurch gekennzeichnet, daß** die Durchlaßrichtungen (P26, P28) der Polarisatoren einen Winkelabstand von 90 + A Grad besitzen, wobei A ungleich null ist, und daß die Ausrichtungen (F21, F23) der beiden Kompensationsstrukturen einen Winkelabstand von 90 + B Grad aufweisen, wobei B ungleich null ist.

2. Vorrichtung nach Anspruch 1, **dadurch gekennzeichnet, daß** die Spirale einen Wert von 90 Grad besitzt und daß der Winkel A größer als 2 Grad ist.

3. Vorrichtung nach einem der vorstehenden Ansprüche, **dadurch gekennzeichnet, daß** die Winkelhalbierenden der Fluchtungsrichtungen (A31, A33) der äußersten Moleküle der Flüssigkristallschicht die Winkelhalbierenden der Polarisatoren in Durchlaßrichtung (P26, P28) sind.

4. Vorrichtung nach einem der vorstehenden Ansprüche, **dadurch gekennzeichnet, daß** die Winkelhalbierenden der Fluchtungsrichtungen (A31, A33) der äußersten Moleküle der Flüssigkristallschicht die Winkelhalbierenden der Ausrichtungen der Kompensationsstrukturen (F21, F23) sind.

5. Vorrichtung nach Anspruch 1, **dadurch gekennzeichnet, daß** die Winkelhalbierenden der Fluchtungsrichtungen (A31, A33) der äußersten Moleküle der Flüssigkristallschicht nicht mit den Winkelhalbierenden der Polarisatoren in Durchlaßrichtung (P26, P28) kolinear sind.

6. Vorrichtung nach einem der vorstehenden Ansprüche, **dadurch gekennzeichnet, daß** die Durchlaßrichtungen (P26, P28) der Polarisatoren und die Ausrichtungen (F21, F23) der Kompensationsstrukturen einen Abstand von der inneren Winkelhalbierenden der Fluchtungsrichtungen (A31, A33) der äußersten Moleküle der Flüssigkristallschicht (20) aufweisen.

7. Vorrichtung nach Anspruch 5, **dadurch gekennzeichnet, daß** die Verstellung der Polarisatoren (P26, P28) einer Drehung eines der Polarisatoren (P26) um einen ersten Winkel C bezüglich der Senkrechten auf der Zelle und einer Drehung des anderen Poralisators (P28) um einen zweiten Winkel D bezüglich der gleichen Achse, aber in entgegengesetzter Richtung entspricht, wobei die Polarisationsrichtungen (P26, P28) einen Winkelabstand von 90 + C + D Grad besitzen und sich die Werte des ersten Drehwinkels und die des zweiten Drehwinkel voneinander unterscheiden.

8. Vorrichtung nach Anspruch 7, **dadurch gekennzeichnet, daß** der erste Winkel C oder der zweite Winkel D null ist und der jeweils andere ungleich null.

9. Vorrichtung nach Anspruch 8, **dadurch gekennzeichnet, daß** die Kompensationsstruktur (21, 22 und 23, 24), die jedem der Polarisatoren (26, 28) am nächsten liegt, um den gleichen Wert wie der Polarisator verstellt ist.

10. Vorrichtung nach einem der Ansprüche 8 und 9, **dadurch gekennzeichnet, daß** der Winkel ungleich null den Wert von 4 Grad besitzt.

11. Vorrichtung nach einem der vorstehenden Ansprüche, **dadurch gekennzeichnet, daß** in der Dicke der Zelle die relativen Ausrichtungen der Spiral-Flüssigkristallschicht, der beiden Polarisatoren und der beiden Kompensationsstrukturen den horizontalen Betrachtungswinkel der Vorrichtung maximieren.

12. Vorrichtung nach einem der vorstehenden Ansprüche, **dadurch gekennzeichnet, daß** die Winkel A und B gleich sind.

13. Vorrichtung nach einem der vorstehenden Ansprüche, **dadurch gekennzeichnet, daß** der Wert des Winkels A und der des Winkels B zwischen 2 Grad und 6 Grad liegen.

14. Vorrichtung nach einem der vorstehenden Ansprüche, **dadurch gekennzeichnet, daß** die Vergrößerung des horizontalen Betrachtungswinkels durch Erhöhung der Verstellung der Polarisatoren einstellbar ist.

15. Vorrichtung nach einem der vorstehenden Ansprüche, **dadurch gekennzeichnet, daß** der horizontale Betrachtungswinkel der Vorrichtung durch Verringerung der Dicke der Flüssigkristallschicht vergrößert wird.

## Claims

1. Display device with a liquid crystal cell comprising a layer of twisted nematic liquid crystal (20) placed between two polarizers (26, 28) and comprising, between the layer of liquid crystal and each of the polarizers, a structure (21, 22, 23, 24) for compensating for the cell contrast variations according to the observation angle, which structure comprises a layer (22, 24) of a negative uniaxial birefringent material with an extraordinary axis perpendicular to the plane of the cell on which a layer of a negative uniaxial birefringent material (21,23) with an extraordinary axis inclined with respect to the normal to the plane of the cell is superimposed, the orientation (F21, F23) of the compensation structure being parallel and in the opposite direction to the projection of the extraordinary axis inclined to the normal to the plane of the cell, **characterized in that** the pass directions (P26, P28) of the polarizers are separated by an angle of 90 + A degrees where A is not zero and **in that** the orientations (F21, F23) of the two compensation structures are separated by an angle of 90 + B degrees where B is not zero.

2. Device according to Claim 1, **characterized in that** the twist is at 90 degrees and the angle A is greater than 2 degrees.

3. Device according to either of the preceding claims, **characterized in that** the bisectors of the alignment directions (A31, A33) of the outermost molecules of the liquid crystal layer are the bisectors of the pass directions of the polarizers (P26, P28).

4. Device according to one of the preceding claims, **characterized in that** the bisectors of the alignment directions (A31, A33) of the outermost molecules of the liquid crystal layer are the bisectors of the orientations of the compensation structures (F21, F23).

5. Device according to Claim 1, **characterized in that** bisectors of the alignment directions (A31, A33) of the outermost molecules of the liquid crystal layer are not collinear with the bisectors of the pass directions of the polarizers (P26, P28).

6. Device according to one of the preceding claims, **characterized in that** the pass directions (P26, P28) of the polarizers and the orientations (F21, F23) of the compensations structures are separated by the internal bisector of the alignment directions (A31, A33) of the outermost molecules of the liquid crystal layer (20).

7. Device according to Claim 5, **characterized in that** the uncrossing of the polarizers (P26 and P28) corresponds to a rotation by a first angle C about the normal to the cell of one of the polarizers (P26) and to a rotation by a second angle D about the same axis but in the opposite direction to the other of the polarizers (P28) the polarization directions (P26 and P28) are separated by an angle 90 + C + D degrees and the values of the first C and second D angle of rotation are different.

8. Device according to Claim 7, **characterized in that** one of the first and second angles C and D is zero, the other being non-zero.

9. Device according to Claim 8, **characterized in that** the compensation structure (21, 22 and 23, 24) closest to each of the polarizers (26, 28) is uncrossed by the same value as the polarizer.

10. Device according to either of Claims 8 to 9, **characterized in that** the non-zero angle is equal to four degrees.

11. Device according to one of the preceding claims, **characterized in that**, within the thickness of the cell, the relative orientations of the twisted crystal layer, of the pair of polarizers and of the pair of compensation structures maximize the horizontal viewing angle of the device.

12. Device according to one of the preceding claims, **characterized in that** the angles A and B are equal.

13. Device according to one of the preceding claims, **characterized in that** the value of the angle A and that of the angle B are between 2 and 6 degrees.

14. Device according to one of the preceding claims, **characterized in that** the increase in the horizontal viewing angle is adjustable by increasing the uncrossing of the polarizers.

15. Device according to one of the preceding claims, **characterized in that** the horizontal viewing angle of the device is increased by reducing the thickness of the liquid crystal layer.
